# FASCICULE DE BREVET EUROPEEN

(11) **EP 4 342 589 B1**
(45) Date de publication et mention de la délivrance du brevet: **21.01.2026**
(21) Numéro de dépôt: 23190198.4
(22) Date de dépôt: 08.08.2023
(51) Int. Cl.: B05B 3/08, B05B 14/00, B05B 15/65, A01G 25/00

(54) **DISPOSITIF DE BRUMISATION**
VORRICHTUNG ZUR ZERSTÄUBUNG
MISTING DEVICE

(30) Priorité: 22.09.2022 FR 2209613
(43) Date de publication de la demande: 27.03.2024
(73) Titulaire: Exel Industries, 51200 Epernay (FR)
(72) Inventeur: BALLU, Marc, 51200 Epernay (FR)
(74) Mandataire: Bandpay & Greuter

(56) Documents cités:
- FR-A1- 2 327 822
- FR-A1- 2 481 955
- JP-A- H1 119 537
- US-A- 3 416 729
- US-A1- 2002 148 908

## Description

### DOMAINE TECHNIQUE

La présente invention concerne un dispositif de brumisation et plus particulièrement un dispositif d'arrosage par brumisation permettant une alimentation des plantes et autres végétaux, en eau au moyen de fines gouttelettes.

### ETAT DE LA TECHNIQUE

Il est connu des dispositifs d'arrosage par jets d'eau. De tels dispositifs peuvent engendrer le ruissellement de l'eau du jet et la non pénétration de l'eau dans la terre, dans le cas d'irrigation d'un sol de culture. De plus, le jet d'eau peut endommager les plantes ou autres végétaux à arroser.

Il est également connu, en particulier par le brevet FR 2 615 355, des dispositifs comportant un disque entraîné en rotation permettant l'arrosage par gouttes d'eau ou gouttelettes.

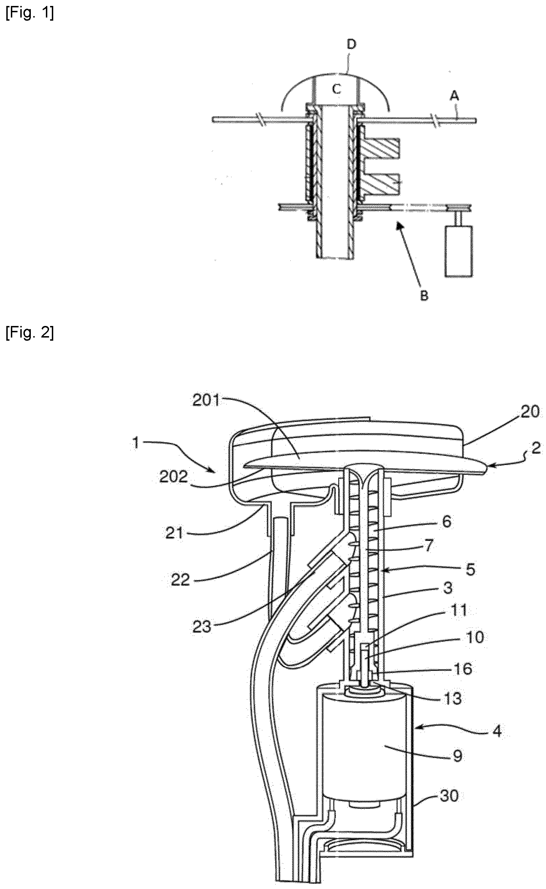

Tel que visible sur la figure 1, ces dispositifs comportent un disque A comprenant une face supérieure et une face inférieure et étant entraîné en rotation par des moyens d'entrainement B, un arbre creux C et une coupelle D. Le disque A est monté sur l'arbre C et la coupelle D est disposée en regard de l'arbre. L'arbre C est configuré pour acheminer l'eau d'une réserve jusqu'à la coupelle D, contre laquelle l'eau va entrer en contact puis être redirigée sur la face supérieure du disque A. Les contacts successifs de l'eau avec la coupelle D, puis le disque A, crées des gouttelettes d'eau, qui sont, au moyen du disque projetées sur les cultures à arroser.

Toutefois, la coupelle D redirige l'eau sur le disque A, à une certaine distance de son axe de rotation, ce qui a pour conséquence de réduire la distance de projection des gouttelettes.

La présente invention vise donc à résoudre les problèmes susmentionnés en proposant un dispositif de brumisation permettant un arrosage par gouttelettes des plantes et autres végétaux, tout en présentant une distance de projection plus importante et en évitant l'endommagement desdites plantes et desdits autres végétaux.

### PRESENTATION DE L'INVENTION

Pour parvenir à ce résultat, la présente invention concerne un dispositif de brumisation comportant un disque entraîné en rotation, le disque comportant une face supérieure et une face inférieure, et un conduit alimenté en liquide et configuré pour acheminer le liquide jusqu'au disque, suivant un axe d'amenée orthogonal au disque, le liquide étant amené, lorsque le dispositif est disposé debout suivant une direction verticale, du bas vers le haut, le conduit comportant une extrémité débouchant sur la face inférieure du disque de façon à permettre la mise en contact du liquide avec la face inférieure du disque en rotation, de manière à éclater le liquide en gouttelettes lorsque le liquide entre en contact de ladite surface inférieure du disque, sous l'effet de la force centrifuge.

En particulier, lorsque le dispositif est dirigé selon une direction verticale et lorsqu'il est observé de l'extérieur de bas en haut, le disque centrifuge s'étend alors selon une direction horizontale par comparaison à la direction verticale du dispositif.

Un tel agencement du disque et du conduit permet la projection du liquide directement sur le disque, en particulier sur sa face inférieure, proche de son axe de rotation. Cela permet la création de gouttelettes de liquide ainsi que la projection desdites gouttelettes sur les plantes et autres végétaux à arroser, en maximisant la distance de projection desdites gouttelettes. Ainsi, le dispositif de brumisation permet l'arrosage d'une importante surface de plantes et autres végétaux sans pour autant les endommager.

Le dispositif comporte en outre un cache modulaire, ledit cache modulaire s'étendant au moins en partie en regard de la face inférieure du disque, de façon à obturer tout ou partie d'une section angulaire du disque, ledit cache modulaire étant configuré pour contrôler le volume des gouttelettes de liquide projetées vers l'extérieur du dispositif.

Le cache modulaire disposé en regard de la face inférieure du disque permet de récupérer, au moins sur une partie de la section angulaire du disque, les gouttelettes de liquide projetées. La récupération de ces dites gouttelettes permet de contrôler le volume de liquide projeté sur les plantes et/ou autres végétaux. Ainsi, du liquide peut ne pas être projeté sur une zone non souhaitée.

Avantageusement, le conduit forme une chambre et en ce que ledit dispositif comporte un système d'amenée, le système d'amenée étant logé dans ladite chambre, et étant configuré pour amener le liquide jusqu'à l'extrémité du conduit.

Le système d'amenée permet l'acheminement du liquide de la réserve de liquide jusqu'à l'extrémité du conduit, au travers de la chambre du conduit. Le dispositif présente ainsi une hauteur, suivant l'axe du disque, configurée pour permettre de loger, à l'intérieur de ladite chambre, le système d'amenée du liquide. En particulier, lorsque le dispositif est dirigé selon une verticale et lorsqu'il est observé de l'extérieur de bas en haut, le système d'amenée de liquide achemine le liquide de bas en haut, vers la face inférieure du disque centrifuge.

Avantageusement, le système d'amenée comporte au moins une vis sans fin, ladite vis sans fin étant entraînée en rotation et configurée pour amener le liquide jusqu'à l'extrémité du conduit, la vis sans fin ayant un axe confondu avec l'axe d'amenée.

La vis sans fin permet par rotation d'amener le liquide de la réserve de liquide, jusqu'à l'extrémité du conduit. En effet, disposée dans la chambre, la vis sans fin est entraînée en rotation et amène le liquide jusqu'à l'extrémité du conduit, notamment au moyen de son filetage, la vitesse de rotation de la vis sans fin le projette, par force centrifuge, contre la face inférieure du disque. Le contact du liquide contre le disque en rotation permet la création de gouttelettes.

Avantageusement encore, le disque et la vis sans fin sont solidaires.

Le disque et la vis sans fin peuvent également être monobloc.

Préférentiellement encore, ledit cache modulaire est situé à distance du disque selon l'axe d'amenée, notamment à une distance mesurée selon une direction horizontale, lorsque le dispositif est dirigé selon une verticale et lorsqu'il est observé de l'extérieur de bas en haut, qui est comprise entre 1 mm et 300 mm.

Selon l'invention, le cache modulaire comporte au moins un réceptacle disposé en regard de la face inférieure du disque et étant configuré pour stocker les gouttelettes de liquide récupérées par ledit cache modulaire et n'étant projetées vers l'extérieur.

Le réceptacle permet le stockage des gouttelettes de liquide récupérées par le cache modulaire. Ce stockage empêche le liquide de se déverser sur les plantes et autres végétaux à arroser.

Avantageusement encore, ledit dispositif comporte un système d'amenée, le système d'amenée étant logé dans ladite chambre, et ledit cache modulaire comporte au moins un premier canal reliant ledit réceptacle au conduit du dispositif, le premier canal étant configuré pour réintroduire le liquide récupéré dans le réceptacle dans le système d'amenée de liquide logé dans la chambre, le système d'amenée étant configuré pour amener le liquide d'une réserve de liquide, jusqu'à l'extrémité du conduit ainsi que pour amener le liquide du réceptacle jusqu'à ladite extrémité du conduit.

Préférentiellement, le cache modulaire et le réceptacle de récupération forment un même sous-ensemble mécanique.

Préférentiellement encore, le dispositif comporte en outre un dispositif d'entrainement, configuré pour entraîner en rotation le disque, ledit dispositif d'entrainement étant disposé dans la prolongation du conduit, suivant l'axe d'amenée.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1, déjà décrite, représente de façon schématique un dispositif d'arrosage, en coupe, selon l'état de la technique ;
La figure 2 représente, de façon schématique, un dispositif de brumisation selon l'invention, vu en coupe, le dispositif comportant un disque, un conduit, un système d'amenée, un cache modulaire et un dispositif d'entrainement ;
La figure 3 représente, de façon schématique, le dispositif de la figure 2, vu en coupe, avec le liquide circulant dans ledit dispositif ;
La figure 4a représente, de façon schématique, un agrandissement d'une extrémité du conduit débouchant sur la face inférieure du disque du dispositif de la figure 2 ;
La figure 4b représente, de façon schématique, un agrandissement du dispositif d'entrainement du dispositif de la figure 2 ;
La figure 5a représente, de façon schématique, le dispositif de la figure 2, vu en perspective ;
La figure 5b représente de façon similaire à la figure 5a le dispositif de l'invention, mais selon un autre angle ;
La figure 6a est une vue en perspective d'un dispositif de brumisation selon un mode de réalisation de l'invention, prise de face ;
La figure 6b est une vue en perspective du dispositif de la figure 6a, prise de gauche ; et
La figure 6c est une vue en perspective arrière du dispositif de la figure 6a.

Il faut noter que les figures exposent l'invention de manière détaillée pour permettre de mettre en oeuvre l'invention ; bien que non limitatives, lesdites figures servent notamment à mieux définir l'invention le cas échéant.

### DESCRIPTION DETAILLEE DE L'INVENTION

L'invention concerne un dispositif de brumisation 1, tel que représenté sur la figure 2, comportant un disque 2 et un conduit 3.

Le disque 2 comporte une face supérieure 201 et une face inférieure 202. La face supérieure 201 est opposée à la face inférieure 202.

Le conduit 3 est configuré pour acheminer un liquide 203 d'une réserve de liquide jusqu'au disque 2, suivant un axe d'amenée orthogonal au disque 2. Le conduit 3 s'étend longitudinalement entre une base 301 et une extrémité 302.

L'extrémité 302 du conduit 3 est configurée pour permettre la sortie du liquide 203 du conduit 3.

En particulier, le conduit 3 forme une chambre 6 configurée pour recevoir ledit liquide 203. En effet, le conduit 3 est formé par un tube creux délimitant ladite chambre 6.

La face inférieure 202 du disque 2 est disposée en regard de l'extrémité 302 du conduit 3. L'extrémité 302 débouche sur la face inférieure 202 du disque 2 de façon à permettre la mise en contact du liquide avec la face inférieure 202 du disque 2 en rotation, de manière à éclater le liquide en gouttelettes lorsque le liquide entre en contact de ladite surface inférieure 202 du disque 2, sous l'effet de la force centrifuge.

Le dispositif de brumisation 1 comporte en outre un système d'amenée 5. Le système d'amenée 5 s'étend sensiblement longitudinalement et il est logé dans la chambre 6 du conduit 3. Le système d'amenée 5 est configuré pour amener le liquide 203 de la réserve de liquide, jusqu'à l'extrémité 302 du conduit 3.

Le système d'amenée 5 comporte au moins une vis sans fin 7 s'étendant le long du conduit 3, dans la chambre 6. La vis sans fin 7 ayant un axe confondu avec l'axe d'amenée vers le disque 2. La vis sans fin 7 est configurée pour amener le liquide 203 de la réserve de liquide, jusqu'à l'extrémité 302 du conduit 3.

Selon un mode de réalisation particulier de l'invention, le disque 2 et la vis sans fin 7 sont solidaires. En effet, la vis sans fin 7 peut être logé dans le conduit 3, en particulier dans la chambre 6 du conduit 3, entre la base 301 et jusqu'à l'extrémité 302 et peut être fixée à la face inférieure 202 du disque 2.

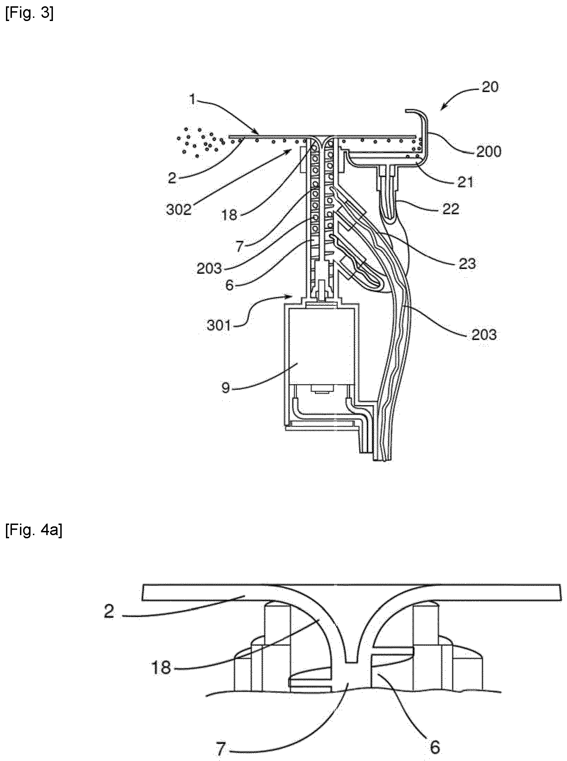

Selon un autre mode de réalisation particulier de l'invention, le disque 2 et la vis sans fin 7 sont monobloc, c'est-à-dire ne forment qu'une seule pièce. Dans ce mode de réalisation représenté sur les figures, la vis sans fin 7 est logée dans le conduit 3, en particulier dans la chambre 6 et saille de l'extrémité 302 du conduit 3. Depuis l'extrémité saillante de la vis sans fin 7 s'étend alors le disque 2. Cela permet de simplifier la structure du dispositif 1 de l'invention et renforce sa faisabilité. Cela est rendu particulièrement visible sur la figure 4a.

Tel que visible sur la figure 4a, le disque 2 s'étend à distance de l'extrémité 302 du conduit, de sorte à laisser un espace entre le conduit 3 et le disque 2, la chambre 6 du conduit 3 débouchant sur l'extérieur.

Avantageusement, l'extrémité 302 est à une distance du disque 2 comprise entre 1 mm et 100 mm, de préférence entre 1 mm et 50 mm et de préférence encore entre 1 mm et 5 mm. De telles distances permettent de guider efficacement le liquide vers le disque 2, en évitant un écoulement de liquide depuis l'extrémité 302.

En outre, une cavité de couplage 11 est ménagée dans la deuxième extrémité de la vis sans fin 7 ; c'est-à-dire l'extrémité opposée à celle fixée au disque 2.

En outre, le dispositif de brumisation 1 comporte un dispositif d'entrainement 4, configuré pour entrainer en rotation le disque 2.

Le dispositif d'entrainement 4 comporte un moteur 9 électrique duquel saille un arbre d'entrainement 10.

L'arbre 10 du moteur 9 est configuré pour coopérer avec la cavité de couplage 11 de la vis sans fin 7. Le couplage de l'arbre 10 et de la cavité 11 assure le couplage du moteur 9 avec la vis 7 et donc avec le disque 2. L'entrainement en rotation de l'arbre 10 permet donc l'entrainement en rotation de la vis sans fin 7 ainsi que du disque 2. Un tel couplage arbre 10 et cavité 11 permet de limiter l'usage d'éléments de transmission intermédiaires.

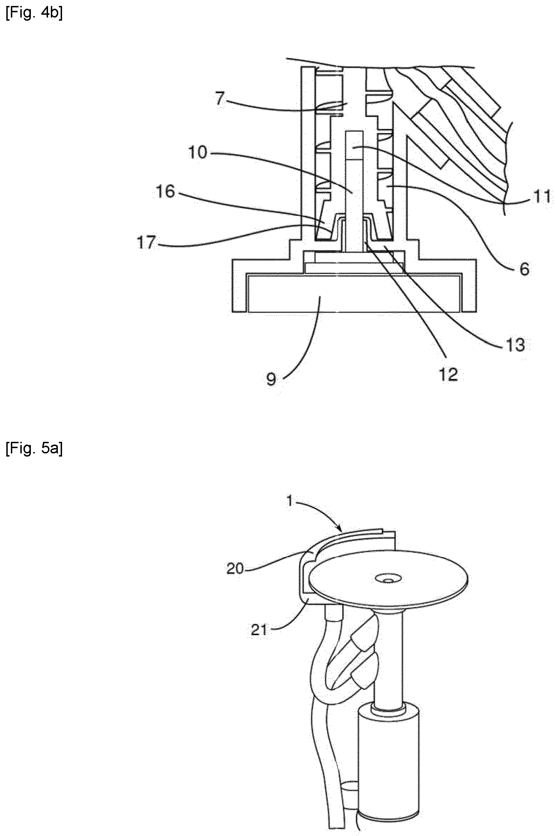

Dans le mode de réalisation représenté sur la figure 4b, le moteur 9 est monté dans un châssis 30 de telle manière que l'arbre d'entrainement 10 traverse une ouverture 12 ménagée à travers une paroi formant un fond 13 de la chambre 6, une saillie s'étend depuis le fond 13 de la chambre 6. La vis sans fin 7 comporte en outre une portion de centrage 16 autour de la cavité 11. La portion de centrage 16 présente une forme sensiblement tronconique et présente un évidement 17 sensiblement tronconique, configuré pour loger au moins une partie de la paroi de fond 13 lorsque le moteur 9 est couplé à la vis 7. Une telle structure permet de former une chicane entre la chambre 6 et l'ouverture 12, ce qui permet de limiter les risques de fuite du liquide contenu dans la chambre 6 vers le moteur 9.

Selon une variante non représentée, un dispositif d'étanchéité, par exemple un joint, peut être monté au niveau de l'ouverture 12 pour limiter le risque de fuite de liquide vers le moteur 9.

Selon un mode de réalisation particulier de l'invention, notamment illustré à la figure 4a, la vis 7 présente une section de transition 18 configurée pour guider le liquide sortant de la chambre 6.

En outre, le dispositif de brumisation 1 comporte un canal 23 reliant la réserve de liquide 203 au conduit 3. En particulier, le canal 23 relie ladite réserve à la chambre 6. Ce canal 23 est configuré pour acheminer le liquide 203 vers le conduit 3, dans la chambre 6.

Tel que cela est représenté sur la figure 3, le canal 23 achemine du liquide depuis une réserve de liquide (non représentée) jusqu'à la chambre 6 du conduit 3. Une fois introduit dans la chambre 6, le liquide entre en contact avec la vis sans fin 7 qui est entraînée en rotation par l'arbre d'entrainement 10 du moteur 9. Le filetage de la vis 7 permet d'acheminer le liquide 203 jusqu'à l'extrémité 302 du conduit, puis par force centrifuge, le liquide est projeté contre la face inférieure 202 du disque 2, lui-même entraîné en rotation par la vis sans fin 7. Le liquide est projeté à proximité de l'axe de rotation du disque 2.

Le contact entre le liquide 203 et le disque 2 en rotation va alors permettre la création de gouttelettes de liquide puis va les pulvériser sur les plantes et/ou autres végétaux à arroser.

Un tel agencement du disque et du conduit permet de maximiser la distance de pulvérisation desdites gouttelettes. Ainsi, le dispositif de brumisation permet l'arrosage d'une importante surface de plantes et autres végétaux sans pour autant les endommager.

En outre, le dispositif de brumisation 1 comporte au moins un cache modulaire 20. Le cache modulaire 20 s'étend au moins en partie en regard de la face inférieure 202 du disque 2, de façon à obturer tout ou partie d'une section angulaire du disque 2. Le cache modulaire 20 est configuré pour contrôler le volume des gouttelettes de liquide projetées vers l'extérieur, ainsi que l'orientation de brumisation.

En particulier, le cache modulaire 20 permet de récupérer, au moins sur une section angulaire du disque 2, les gouttelettes de liquide projetées. La récupération de ces dites gouttelettes permet de réguler et/ou de contrôler le volume de liquide projeté sur les plantes et/ou autres végétaux.

Le cache modulaire 20 est situé à distance du disque selon l'axe d'amenée, notamment à une distance mesurée selon une direction horizontale, lorsque le dispositif est dirigé selon une verticale et lorsqu'il est observé de l'extérieur de bas en haut, qui est comprise entre 1 mm et 300 mm.

De plus, le cache modulaire 20 comporte un réceptacle 21. Le réceptacle 21 est disposé en regard de la face inférieure 202 du disque 2 et il est configuré pour stocker les gouttelettes de liquide récupérées par le cache modulaire 20 et n'étant pas projetées vers l'extérieur.

En particulier, le réceptacle 21 s'étend à distance du disque 2, en regard de sa face inférieure 202. Ladite distance correspond principalement à la profondeur du réceptacle à laquelle s'ajoute la distance entre l'extrémité 302 du conduit et le disque 2.

En outre, le cache modulaire 20 peut comporter une paroi de récupération 200 s'étendant depuis le réceptacle 21, vers la face supérieure 201 du disque 2.

Tel que cela est représenté sur les figures et notamment sur la figure 3, de manière avantageuse, la paroi de récupération 200 s'étend orthogonalement au réceptacle 21 du cache modulaire 20.

Le cache modulaire 20 peut également comporter un premier canal 22, reliant le réceptacle 21 au conduit 3 et, en particulier, à la chambre 6.

Le canal 22 permet de réintroduire le liquide récupéré dans le réceptacle 21 dans le système d'amenée 5 de liquide logé dans la chambre 6.

Selon un mode de réalisation non représenté, le dispositif 1 peut comporter une pluralité de cache modulaire 20, comportant chacun un réceptacle et un canal permettant la réintroduction du liquide dans le conduit 3.

Ici, le cache modulaire 20 et le réceptacle 21 peuvent former un même sous-ensemble mécanique, c'est-à-dire soit être solidaires, soit être monobloc.

Selon l'invention, le cache modulaire 20 est amovible, c'est-à-dire, configuré pour se rétracter ou se déployer, de sorte à recouvrir respectivement une plus petite surface angulaire du disque ou une plus grande surface angulaire du disque selon le besoin. Le réceptacle 21 se rétracte et se déploie de manière similaire au cache 20.

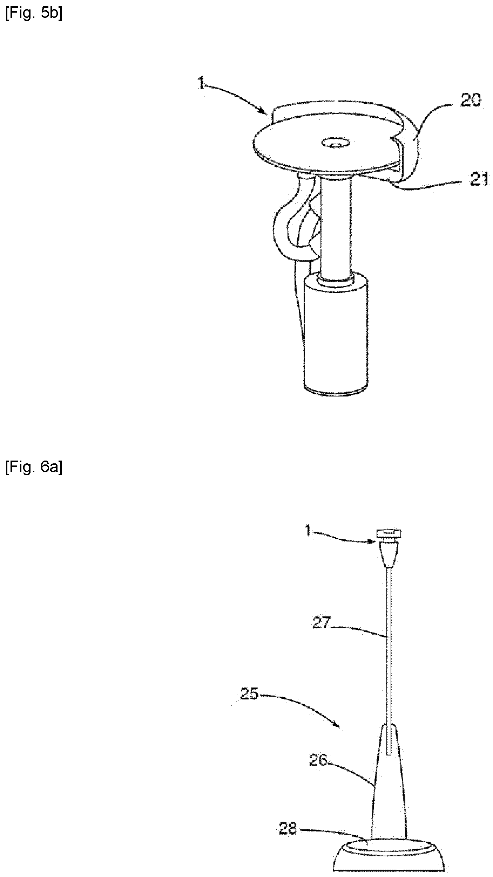

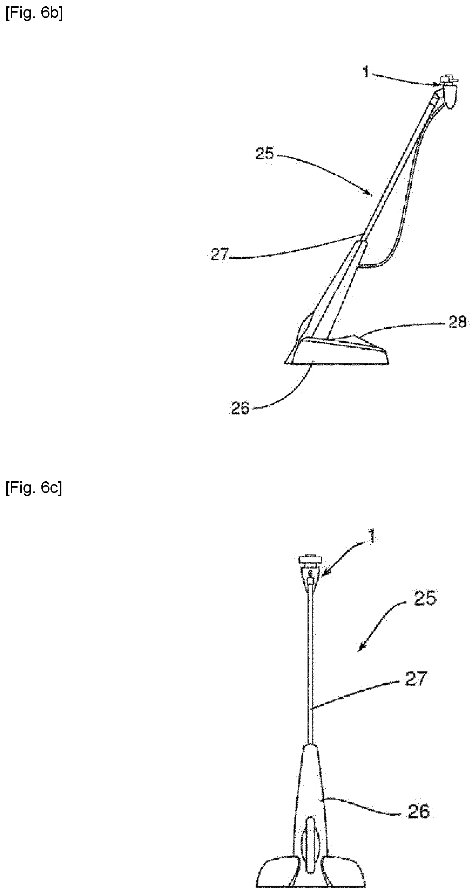

Les figures 6a, 6b et 6c représentent un mode de réalisation particulier de l'invention. Le dispositif de brumisation 1 est monté dans un appareil de brumisation 25, comportant une embase 26, un mât 27 et un réservoir 28.

Le mât 27 est, d'une part, relié à l'embase 26, et d'autre part au dispositif de brumisation 1. Ledit mât 27 peut être télescopique, de sorte à permettre l'ajustement de la hauteur du dispositif de brumisation 1 pendant son utilisation.

Le réservoir 28 est avantageusement amovible et forme la réserve de liquide.

Avantageusement, l'appareil de brumisation 25 comporte des moyens d'émission et de réception, ainsi que des moyens de commande configurés pour permettre la commande dudit appareil 25 à distance.

Avantageusement encore, le mât 27 est déformable, permettant de modifier sa forme tout en permettant de loger une alimentation en fluide pour le dispositif de brumisation 1 et en énergie pour l'élément d'entrainement.

L'invention n'est pas limitée aux modes de réalisation précédemment décrits mais s'étend à tout mode de réalisation conforme à la portée des revendications.

## Revendications

1. Dispositif de brumisation (1) comportant :
▪ un disque (2) entraîné en rotation, le disque (2) comportant une face supérieure (201) et une face inférieure (202),
▪ un conduit (3) alimenté en liquide (203) et configuré pour acheminer le liquide (203) jusqu'au disque (2), suivant un axe d'amenée orthogonal au disque (2), le liquide (203) étant amené, lorsque le dispositif (1) est disposé debout suivant une direction verticale, du bas vers le haut, le conduit (3) comportant une extrémité (302) débouchant sur la face inférieure (202) du disque (2) de façon à permettre la mise en contact du liquide (203) avec la face inférieure (202) du disque (2) en rotation, de manière à éclater le liquide (203) en gouttelettes lorsque le liquide (203) entre en contact de ladite surface inférieure (202) du disque (2), sous l'effet de la force centrifuge, et
▪ un cache modulaire (20), ledit cache modulaire (20) s'étendant au moins en partie en regard de la face inférieure (202) du disque (2), de façon à obturer tout ou partie d'une section angulaire du disque (2), ledit cache modulaire (20) étant configuré pour contrôler le volume des gouttelettes de liquide (203) projetées vers l'extérieur du dispositif (1),
le cache modulaire comportant un réceptacle (21) disposé en regard de la face inférieure (202) du disque (2) et étant configuré pour stocker les gouttelettes de liquide (203) récupérées par ledit cache modulaire (20) et n'étant projetées vers l'extérieur,
ledit cache modulaire (20) étant configuré pour se rétracter et/ou de se déployer, de sorte à recouvrir respectivement une plus petite surface angulaire du disque (2) et/ou une plus grande surface angulaire du disque (2), le réceptacle (21) se rétractant et/ou se déployant de manière similaire au cache (20).

2. Dispositif de brumisation (1) selon la revendication précédente, **caractérisé en ce que** le conduit (3) forme une chambre (6) et **en ce que** ledit dispositif (1) comporte un système d'amenée (5), le système d'amenée (5) étant logé dans ladite chambre (6), et étant configuré pour amener le liquide (203) jusqu'à l'extrémité (302) du conduit (3).

3. Dispositif de brumisation (1) selon la revendication précédente, **caractérisé en ce que** le système d'amenée (5) comporte au moins une vis sans fin (7), ladite vis sans fin (7) étant entraînée en rotation et configurée pour amener le liquide (302) jusqu'à l'extrémité (302) du conduit (3), la vis sans fin (7) ayant un axe confondu avec l'axe d'amenée.

4. Dispositif de brumisation (1) selon la revendication précédente, **caractérisé en ce que** le disque (2) et la vis sans fin (7) sont solidaires.

5. Dispositif de brumisation (1) selon l'une quelconque des revendications précédentes, dans lequel ledit cache modulaire (20) est situé à distance du disque (2) selon l'axe d'amenée, notamment à une distance mesurée selon une direction horizontale, lorsque le dispositif (1) est dirigé selon une verticale et lorsqu'il est observé de l'extérieur de bas en haut, qui est comprise entre 1 mm et 300 mm.

6. Dispositif de brumisation (1) selon l'une quelconque des revendications précédentes, **caractérisé en ce que** ledit dispositif (1) comporte un système d'amenée (5), le système d'amenée (5) étant logé dans ladite chambre (6), et **en ce que** ledit cache modulaire (20) comporte au moins un premier canal (22) reliant ledit réceptacle (21) au conduit (3) du dispositif (1), le premier canal (22) étant configuré pour réintroduire le liquide (203) récupéré dans le réceptacle (21) dans le système d'amenée (5) de liquide (203) logé dans la chambre (6), le système d'amenée (5) étant configuré pour amener le liquide (203) d'une réserve de liquide, jusqu'à l'extrémité (302) du conduit (3) ainsi que pour amener le liquide (203) du réceptacle (21) jusqu'à ladite extrémité (302) du conduit (3).

7. Dispositif de brumisation (1) selon l'une quelconque des revendications précédentes, **caractérisé en ce que** le cache modulaire (20) et le réceptacle de récupération (21) forment un même sous-ensemble mécanique.

8. Dispositif de brumisation (1) selon l'une quelconque des revendications précédentes, **caractérisé en ce qu'**il comporte en outre un dispositif d'entrainement (4), configuré pour entraîner en rotation le disque (2), ledit dispositif d'entrainement (4) étant disposé dans la prolongation du conduit (3), suivant l'axe d'amenée.

## Patentansprüche

1. Vorrichtung zur Zerstäubung (1), umfassend:
• eine (2) Scheibe, die in Rotation versetzt ist, wobei die Scheibe (2) eine obere Seite (201) und eine untere Seite (202) umfasst,
• eine Leitung (3) die mit Flüssigkeit (203) versorgt wird, und konfiguriert, um die Flüssigkeit (203) entlang einer Zufuhrachse orthogonal zur Scheibe (2) bis zur Scheibe (2) zu leiten, wobei die Flüssigkeit (203), wenn die Vorrichtung (1) entlang einer vertikalen Richtung aufrecht angeordnet ist, von unten nach oben geleitet wird, wobei die Leitung (3) ein Ende (302) aufweist, das auf die untere Seite (202) der Scheibe (2) mündet, um das In-Kontakt-Bringen der Flüssigkeit (203) mit der unteren Seite (202) der Scheibe (2) in Rotation zu ermöglichen, um die Flüssigkeit (203) in Tröpfchen zerspringen zu lassen, wenn die Flüssigkeit (203) unter der Einwirkung der Zentrifugalkraft in Kontakt mit der unteren Fläche (202) der Scheibe (2) kommt, und
• eine modulare Abdeckung (20), wobei sich die modulare Abdeckung (20) mindestens teilweise gegenüber der unteren Seite (202) der Scheibe (2) erstreckt um die Gesamtheit oder einen Teil eines Winkelbereichs der Scheibe (2) zu verschließen, wobei die modulare Abdeckung (20) konfiguriert ist, um das Volumen der Flüssigkeitströpfchen (203) zu steuern, die gegen das Äußere der Vorrichtung (1) projiziert werden,
wobei die modulare Abdeckung einen Behälter (21) umfasst, der gegenüber der unteren Seite (202) der Scheibe (2) angeordnet und konfiguriert ist, um die Flüssigkeitströpfchen (203) zu speichern, die von der modularen Abdeckung (20) wiedergewonnen und nicht nach außen projiziert werden,
wobei die modulare Abdeckung (20) konfiguriert ist, um zurückgezogen und/oder ausgefahren zu werden, um jeweils eine kleinere Winkelfläche der Scheibe (2) und/oder eine größere Winkelfläche der Scheibe (2) abzudecken, wobei der Behälter (21) auf ähnliche Weise wie die Abdeckung (20) zurückgezogen und/oder ausgefahren wird.

2. Vorrichtung zur Zerstäubung (1) nach dem vorhergehenden Anspruch, **dadurch gekennzeichnet, dass** die Leitung (3) eine Kammer (6) bildet, und dadurch, dass die Vorrichtung (1) ein Zufuhrsystem (5) umfasst, wobei das Zufuhrsystem (5) in der Kammer (6) aufgenommen und konfiguriert ist, um die Flüssigkeit (203) bis an das Ende (302) der Leitung (3) zu führen.

3. Vorrichtung zur Zerstäubung (1) nach dem vorhergehenden Anspruch, **dadurch gekennzeichnet, dass** das Zufuhrsystem (5) mindestens eine Endlosschnecke (7) umfasst, wobei die Endlosschnecke (7) in Rotation versetzt und konfiguriert ist, um die Flüssigkeit (302) bis an das Ende (302) der Leitung (3) zu führen, wobei die Endlosschnecke (7) eine Achse aufweist, die mit der Zufuhrachse zusammenfällt.

4. Vorrichtung zur Zerstäubung (1) nach dem vorhergehenden Anspruch, **dadurch gekennzeichnet, dass** die Scheibe (2) und die Endlosschnecke (7) einstückig sind.

5. Vorrichtung zur Zerstäubung (1) nach einem der vorhergehenden Ansprüche, wobei sich die modulare Abdeckung (20) in einem Abstand von der Scheibe (2) entlang der Zufuhrachse befindet, insbesondere in einem Abstand, der entlang einer horizontalen Richtung gemessen wird, wenn die Vorrichtung (1) entlang einer Vertikalen ausgerichtet ist, und wenn sie von außen von unten nach oben betrachtet wird, der im Bereich zwischen 1 mm und 300 mm liegt.

6. Vorrichtung zur Zerstäubung (1) nach einem der vorhergehenden Ansprüche, **dadurch gekennzeichnet, dass** die Vorrichtung (1) ein Zufuhrsystem (5) umfasst, wobei das Zufuhrsystem (5) in der Kammer (6) aufgenommen ist, und dadurch, dass die modulare Abdeckung (20) mindestens einen ersten Kanal (22) umfasst, der den Behälter (21) mit der Leitung (3) der Vorrichtung (1) verbindet, wobei der erste Kanal (22) konfiguriert ist, um die wiedergewonnene Flüssigkeit (203) erneut in den Behälter (21) im Flüssigkeitszufuhrsystem (5) (203), das in der Kammer (6) aufgenommen ist, einzuführen, wobei das Zufuhrsystem (5) konfiguriert ist, um die Flüssigkeit (203) aus einem Flüssigkeitsreservoir bis an das Ende (302) der Leitung (3) zu führen, sowie um die Flüssigkeit (203) des Behälters (21) bis an das Ende (302) der Leitung (3) zu führen.

7. Vorrichtung zur Zerstäubung (1) nach einem der vorhergehenden Ansprüche, **dadurch gekennzeichnet, dass** die modulare Abdeckung (20) und der Wiedergewinnungsbehälter (21) eine gleiche mechanische Untereinheit bilden.

8. Vorrichtung zur Zerstäubung (1) nach einem der vorhergehenden Ansprüche, **dadurch gekennzeichnet, dass** sie außerdem eine Antriebsvorrichtung (4) umfasst, die konfiguriert ist, um die Scheibe (2) in Rotation zu versetzen, wobei die Antriebsvorrichtung (4) in der Verlängerung der Leitung (3) entlang der Zufuhrachse angeordnet ist.

## Claims

1. Misting device (1) comprising:
- a disk (2) driven in rotation, the disk (2) comprising an upper face (201) and a lower face (202),
- a conduit (3) supplied with liquid (203) and configured to convey the liquid (203) to the disk (2), along a feed axis orthogonal to the disk (2), the liquid (203) being conveyed, when the device (1) is arranged upright in a vertical direction, from bottom to top, the conduit (3) comprising an end (302) opening onto the lower face (202) of the disk (2) so as to allow the liquid (203) to come into contact with the lower face (202) of the rotating disk (2), so as to burst the liquid (203) into droplets when the liquid (203) comes into contact with said lower surface (202) of the disk (2), under the effect of centrifugal force, and
- a modular cover (20), said modular cover (20) extending at least partially opposite the lower face (202) of the disk (2), so as to close off all or a portion of an angular section of the disk (2), said modular cover (20) being configured to control the volume of the liquid (203) droplets projected towards the outside of the device (1),
the modular cover comprising a receptacle (21) arranged opposite the lower face (202) of the disk (2) and being configured to store the liquid (203) droplets recovered by the modular cover (20) and not projected outwards,
said modular cover (20) being configured to retract and/or extend, so as to respectively cover a smaller angular surface of the disk (2) and/or a larger angular surface of the disk (2), the receptacle (21) retracting and/or extending similarly to the cover (20).

2. Misting device (1) according to the preceding claim, **characterized in that** the conduit (3) forms a chamber (6) and **in that** said device (1) comprises a feed system (5), the feed system (5) being housed in said chamber (6), and being configured to convey the liquid (203) to the end (302) of the conduit (3).

3. Misting device (1) according to the preceding claim, **characterized in that** the feed system (5) comprises at least one worm screw (7), said worm screw (7) being driven in rotation and configured to convey the liquid (302) to the end (302) of the conduit (3), the worm screw (7) having an axis coincident with the feed axis.

4. Misting device (1) according to the preceding claim, **characterized in that** the disk (2) and the worm screw (7) are integral.

5. Misting device (1) according to any one of the preceding claims, wherein said modular cover (20) is located away from the disk (2) along the feed axis, in particular at a distance measured along a horizontal direction, when the device (1) is directed along a vertical direction and when observed from the outside from bottom to top, which is between 1 mm and 300 mm.

6. Misting device (1) according to any one of the preceding claims, **characterized in that** said device (1) comprises a feed system (5), the feed system (5) being housed in said chamber (6), and **in that** said modular cover (20) comprises at least one first channel (22) connecting said receptacle (21) to the conduit (3) of the device (1), the first channel (22) being configured to reintroduce the liquid (203) recovered in the receptacle (21) into the liquid (203) feed system (5) housed in the chamber (6), the feed system (5) being configured to convey the liquid (203) from a reserve of liquid, to the end (302) of the conduit (3) as well as to convey the liquid (203) from the receptacle (21) to said end (302) of the conduit (3).

7. Misting device (1) according to any one of the preceding claims, **characterized in that** the modular cover (20) and the recovery receptacle (21) form a single mechanical sub-assembly.

8. Misting device (1) according to any one of the preceding claims, **characterized in that** it further comprises a drive device (4), configured to drive the disk (2) in rotation, said drive device (4) being arranged in the extension of the conduit (3), along the feed axis.
